# EUROPÄISCHE PATENTSCHRIFT

(11) **EP 1 092 580 B1**
(45) Veröffentlichungstag und Bekanntmachung des Hinweises auf die Patenterteilung: **13.11.2002**
(21) Anmeldenummer: 99120353.0
(22) Anmeldetag: 12.10.1999
(51) Int. Cl.: B60J 7/14, B60J 7/12, B60J 7/20

(54) **Versenkbares Hardtop für Kraftfahrzeuge sowie Kraftfahrzeug mit Hardtop**
Retractable hardtop for motor vehicle and motor vehicle provided with such hardtop
Hardtop pour véhicule automobile et véhicule automobile équipé avec ce hardtop

(43) Veröffentlichungstag der Anmeldung: 18.04.2001
(73) Patentinhaber: Dura Convertible Systems GmbH, 50735 Köln (DE)
(72) Erfinder: Mac Farland, David, Dipl.-Ing., 85716 Unterschleissheim (DE)
(74) Vertreter: Strobel, Wolfgang, Dipl.-Ing.

(56) Entgegenhaltungen:
- DE-A- 3 416 286
- DE-C- 19 634 510
- US-A- 5 810 413

## Beschreibung

Die vorliegende Erfindung betrifft ein versenkbares Hardtop für Kraftfahrzeuge sowie Kraftfahrzeuge, die mit einem derartigen Hardtop versehen sind.

Kraftfahrzeuge in Form von Cabriolets erfreuen sich zunehmender Beliebtheit, wobei sie stetig auch die Frage der Allwettertauglichkeit beantworten müssen. Für die Tauglichkeit Ganzjahresfahrzeug werden somit erheblich höhere Qualitätsforderungen an die Dachkonstruktion gestellt, insbesondere dahingehend, daß versenkbare Kraftfahrzeugdächer in geschlossenem Zustand im wesentlichen die Qualitäten eines Daches einer Limousine aufweisen sollen.

Neben den Anforderungen an die entsprechende Dichtheit derartiger versenkbarer Dächer wird auch eine Verkehrssicherheit in der Rücksicht gefordert, was dazu geführt hat, daß das Heckfenster des Fahrzeugs nicht mehr aus Kunststoff sondern aus Glas gebildet wird und die nützlichen Zusatzleistungen wie Heizdrähte aufweisen kann.

Durch die starre in der Regel auch nach hinten gewölbte Glasscheibe entsteht beim Versenken des hinteren Dachabschnittes ein erheblicher Platzbedarf für das zu versenkende Dach, wodurch Probleme bei der Unterbringung sonstiger Fahrzeugkomponenten, insbesondere von Kraftstofftanks entstehen. Dies insbesondere auch deshalb, da Cabriolets oder Roadster von sich aus als Zweisitzer in der Regel eine besonders kleine und kompakte Bauweise aufweisen sollen.

Aus der DE 196 34 510 C1 ist eine Dachkonstruktion für Personenwagen bekannt, die aus zwei formstabilen Dachschalen besteht und zwischen einer abgesenkten Ruheposition und einer aufgestellten Funktionsposition beweglich ist. Beim Einziehen der Dachkonstruktion wird der hintere Dachabschnitt derart eingeschwenkt, daß der untere Bereich des als C-Säule dienenden Abschnitts nach vorne in Richtung des Fahrzeuginnenraums gerichtet ist, während der vordere Dachabschnitt nach dem Klappmesserprinzip ohne Verschwenkung darauf abgelegt wird. Der hintere Dachabschnitt wird durch geeignete Steuerungsmittel so weit in Richtung des Fahrzeuginnenraums verschoben, daß in der Ruheposition ein Formbereich des Fahrzeuginnenraums teilweise durch die Seitenränder des hinteren Dachabschnitts begrenzt wird. Die Heckscheibe, die fluchtend mit dem hinteren Dachabschnitt abschließt, kann lösbar in diesem angeordnet sein, so daß sie mittels eines nicht weiter ausgeführten geeigneten Steuermechanismus in eine Position zwischen dem vorderen und dem hinteren Dachäbschnitt abgelegt werden kann. Die Heckscheibe soll gelenkig mit dem vorderen Dachabschnitt dabei verbunden sein.

In der Dachkonstruktion gemäß DE 196 34 510 C1 ist jedoch nachteilig, daß die Heckscheibe von dem Dachabschnitt gelöst und separat in einer vorbestimmten Position abgelegt werden muß, was zusätzliche Handgriffe beim Zusammenklappen des Kraftfahrzeugdaches notwendig macht.

Der vorliegenden Erfindung liegt deshalb die Aufgabe zugrunde, ein versenkbares Hardtop für Kraftfahrzeuge zu schaffen, das einen besonders platzsparenden Aufbau im versenkten Zustand aufweist, und bei dem das Zusammenklappen ohne zusätzliche Eingriffsmaßnahmen erfolgt.

Diese Aufgabe wird durch die Merkmale des Anspruchs 1 gelöst.

Gemäß der vorliegenden Erfindung wird dies insbesondere dadurch erreicht, daß beide Dachabschnitte gleichzeitig und in dieselbe Drehrichtung verschwenkbar angeordnet sind, daß der erste Dachabschnitt während der Schwenkbewegung des zweiten Dachabschnitts in eine Versenkposition im Fahrzeug sich in diesen hineinbewegt, und daß eine starre Heckscheibe schwenkbar an dem zweiten Dachabschnitt angeordnet ist und mit diesem gemeinsam bewegbar ist, wobei sie beim Verschwenken des zweiten Dachabschnitts in die Versenkposition in das Innere des zweiten Dachabschnitts verschwenkt wird.

Dadurch wird erreicht, daß der Raum für das versenkbare Hardtop erheblich verringert werden kann, wodurch der Platzbedarf des versenkbaren Hardtops deutlich reduziert werden kann, und Kraftfahrzeugkomponenten, wie beispielsweise der Kraftstofftank, ausreichend groß dimensioniert werden können. Zudem ergibt sich der Vorteil, daß aufgrund des verringerten Platzbedarfs des Hardtops eine entsprechend steifere Konstruktion des Fahrzeugs möglich wird bzw. auf zusätzliche erhebliche Versteifungsmaßnahmen verzichtet werden kann, was den Gesamtaufbau des Fahrzeugs erheblich verbilligt.

Das erfindungsgemäße versenkbare Hardtop weist eine Reihe großer weiterer Vorteile auf, die nachfolgend angegeben sind.

Dadurch, daß die Heckscheibe in ihrem unteren Bereich in dem Bereich der Fahrzeuglängsseiten mit je einer Stange verbunden ist, wobei jede der beiden Stangen in einem Gelenkpunkt mit zwei Verbindungsstangen gelenkig verbunden ist, von denen eine mit dem Fahrzeug und die andere mit dem zweiten hinteren Dachabschnitt gelenkig verbunden ist, wird erreicht, daß eine Zwangsführung der Heckscheibe beim Ein- oder Ausfahren des versenkbaren Hardtops geschaffen wird. Die Ausgestaltung ist dabei konstruktiv besonders einfach und funktional und bietet eine sichere Betriebsweise über einen langen Zeitraum, wobei zusätzliche Komponenten, wie motorische Hilfsantriebe, vermieden werden können.

Wie üblich, weist das erfindungsgemäße versenkbare Hardtop einen achsensymmetrischen Aufbau bezüglich der Längsachse des Kraftfahrzeugs auf. Die Anordnung der Gestänge erfolgt an den Längsseitenbereichen, und erfolgt symmetrisch zur Längsachse des Fahrzeugs.

Vorteilhafterweise weist das Verbindungsgestänge von erstem und zweitem Dachabschnitt je Fahrzeuglängsseite eine im wesentlichen gerade und eine im wesentlichen gekrümmte oder geknickte, gelenkig angeordnete Verbindungsstange auf. Mit Hilfe dieser insgesamt vier Verbindungsstangen, zwei pro Fahrzeugseite, wird ein besonders einfacher Mechanismus zum Einklappen bzw. Ausfahren des oberen ersten Dachabschnitts bezüglich des zweiten hinteren Dachabschnitts geschaffen.

Weiterhin sind die gekrümmten Verbindungsstangen gelenkig mit dem zweiten Gestänge verbunden, wodurch vorteilhafterweise eine zwangsgeführte Schwenkbewegung des hinteren zweiten Dachabschnitts zusammen mit dem oberen ersten Dachabschnitt ermöglicht wird.

Weiterhin weist der erste obere Dachabschnitt im Bereich der Fahrzeuglängsseite einen Schlitz auf, durch den sich die geraden und gekrümmten bzw. geknickten Verbindungsstangen beim Verschwenken des oberen Dachabschnitts bewegen. Dadurch wird auf einfache Weise die Möglichkeit des Umschwenkens des oberen Dachabschnitts und Einbringen in den hinteren Dachabschnitt ermöglicht.

Vorteilhafterweise weist das erfindungsgemäße versenkbare Hardtop eine flexible Außenabdeckung, beispielsweise aus einem textilen Gewebe, wie Stoff auf, die mit dem ersten oberen Dachabschnitt in dessen vorderen Bereich und dem zweiten Dachabschnitt verbunden ist. Dies hat insbesondere auch den Vorteil, daß der erste und der zweite Dachabschnitt aus einem Kunststoffteil gebildet werden kann, bei denen keine besondere Oberflächenbehandlungen, insbesondere Lackierungen, erforderlich sind. Entsprechend kostengünstig kann das gesamte Hardtop ausgebildet sein.

Die vorliegende Erfindung hat auch ein Kraftfahrzeug, insbesondere ein Cabriolet zum Gegenstand. Ein derartiges Fahrzeug weist einen Aufnahmeraum für eine darin einbringbare Dachabdeckung auf. Erfindungsgemäß weist die Dachabdekkung ein versenkbares Hardtop auf, welches Merkmale, wie oben beschrieben, aufweist.

Weiterhin weist vorteilhafterweise der Hardtopaufnahmeraum einen Bodenabschnitt auf, der um eine zur Fahrzeuglängsrichtung im wesentlichen quer und horizontal verlaufende Schwenkachse schwenkbeweglich angeordnet ist. Dadurch wird ermöglicht, daß bei geschlossenem Dach der Bodenabschnitt nach oben verschwenkt werden kann, wodurch das Kofferraumvolumen deutlich erhöht werden kann.

Weitere Einzelheiten, Merkmale und Vorteile der vorliegenden Erfindung ergeben sich aus der nachfolgenden Beschreibung unter Bezugnahme auf die Zeichnung. Darin zeigt:
- Fig. 1: eine schematische Seitenansicht eines Cabriolets mit versenkbarem Hardtop in geschlossener Stellung;
- Fig. 2: eine erste Öffnungsstellung des versenkbaren Hardtops am Beginn der Versenkbewegung des Hardtops;
- Fig. 3: eine gegenüber der Stellung von Fig. 2 weiter fortgeschrittene Einschwenkstellung des Hardtops,
- Fig. 4: die vollständig eingeschwenkte Stellung des Hardtops, und
- Fig. 5: eine Draufsicht auf den ersten und zweiten Dachabschnitt.

Nachfolgend wir das erfindungsgemäße versenkbare Hardtop sowie das mit diesem Hardtop ausgerüstete Kraftfahrzeug näher beschrieben. In den Figuren werden gleiche Elemente mit gleichen Bezugsziffern bezeichnet.

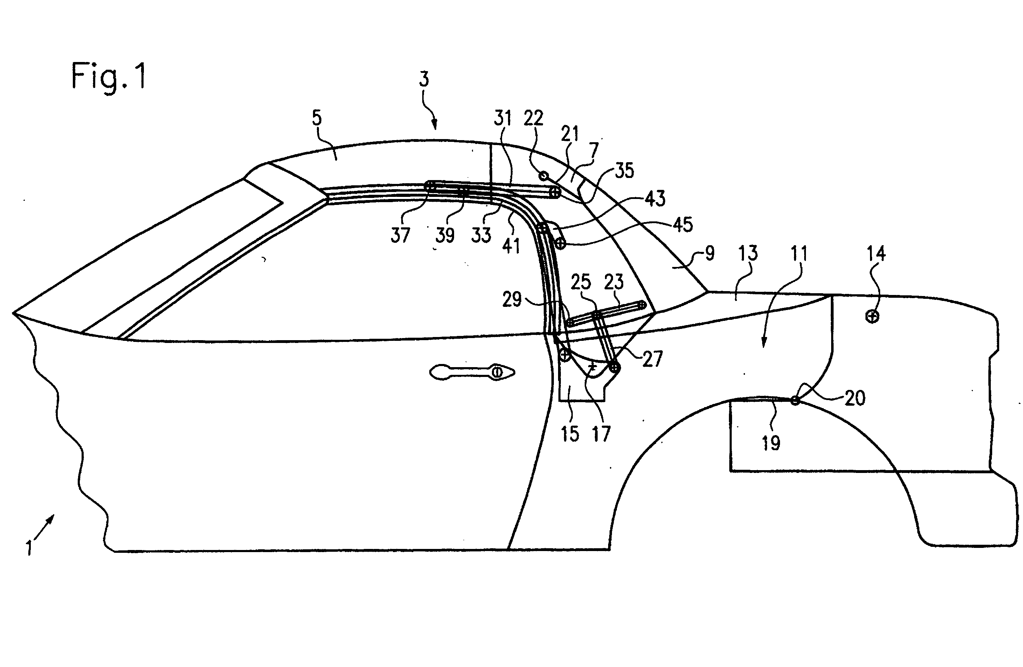

In Fig. 1 ist schematisch in Seitenansicht ein Kraftfahrzeug 1 in Form eines Cabriolets dargestellt. Das Kraftfahrzeug 1 weist ein versenkbares Hardtop 3 auf, das in der in Fig. 1 dargestellten Stellung die geschlossene Stellung des Hardtops bildet.

Das versenkbare Hardtop 3 weist einen ersten im wesentlichen starren oberen Dachabschnitt 5 und einen zweiten im wesentlichen starren hinteren Dachabschnitt 7 auf. In dem hinteren Dachabschnitt 7 ist eine Heckscheibe 9 angeordnet, die als starre Scheibe, insbesondere aus Glas ausgebildet ist.

Das Fahrzeug 1 weist weiterhin einen Aufnahmeraum 11 für das Hardtop 3 auf und weist weiterhin eine Abdeckung 13 auf, die schwenkbeweglich um eine Achse 14 am Fahrzeug angelenkt ist und sich in Fig. 1 in dichtender Abdeckstellung befindet.

Das versenkbare Hardtop 3 ist über einen Lagerbock bzw. eine Lagerplatte 15 mit dem Fahrzeug verbunden. Dabei ist der hintere zweite Dachabschnitt 7 um eine Achse 17 schwenkbeweglich an der Lagerplatte 15 gelagert. Er kann alternativ auch direkt mit dem Fahrzeug verbunden sein und um die Achse 17 schwenken.

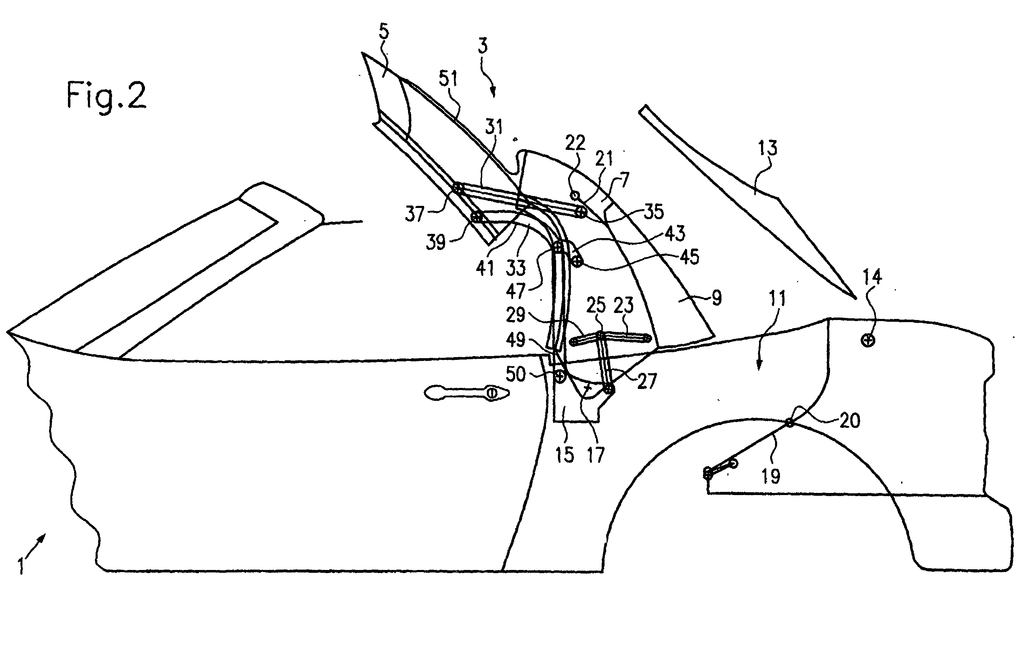

Der Gestängeaufbau des versenkbaren Hardtops 3 wird insbesondere unter Bezugnahme auf Figuren 2 bis 4 näher beschrieben werden.

Wie aus Fig. 1 weiterhin ersichtlich, weist der Aufnahmeraum 11 einen Bodenabschnitt 19 auf, der schwenkbeweglich um eine Achse 20 angeordnet ist, und in der Stellung gemäß Fig. 1 sich in seiner nach oben verschwenkten im wesentlichen horizontalen Lage befindet.

Wie aus Fig. 1 weiterhin ersichtlich, ist die Heckscheibe 9 in ihrem oberen Bereich mittels einer Verbindungsstange 21 schwenkbeweglich gelagert, wobei die Verbindungsstange 21 um eine Drehachse 22 drehbar gelagert ist. Der Einfachheit halber ist in Fig. 1 schematisch nur eine Seite des Gestängeaufbaus des erfindungsgemäßen Hardtops 3 dargestellt. Dieser befindet sich im wesentlichen im Fahrzeuglängsseitenbereich, wobei aus Vereinfachungsgründen der symmetrisch dazu ausgebildete Gestängeaufbau auf der anderen Fahrzeuglängsseite nicht dargestellt ist.

In ihrem unteren Bereich ist die Heckscheibe 9 mit einer Stange 23 in einem Gelenkpunkt 25 am Ende der Stange 23 mit zwei weiteren Verbindungsstangen 27 und 29 verbunden. Die Verbindungsstange 27 ist mit der Lagerplatte 15 gelenkig verbunden und die Verbindungsstange 29 ist mit dem zweiten hinteren Dachabschnitt 7 verbunden. In der geschlossenen Stellung des Hardtops 3 gemäß Fig. 1 befinden sich die Verbindungsstangen 25 und 29 in einer geraden Linie und die Verbindungsstange 27 verläuft im wesentlichen senkrecht dazu.

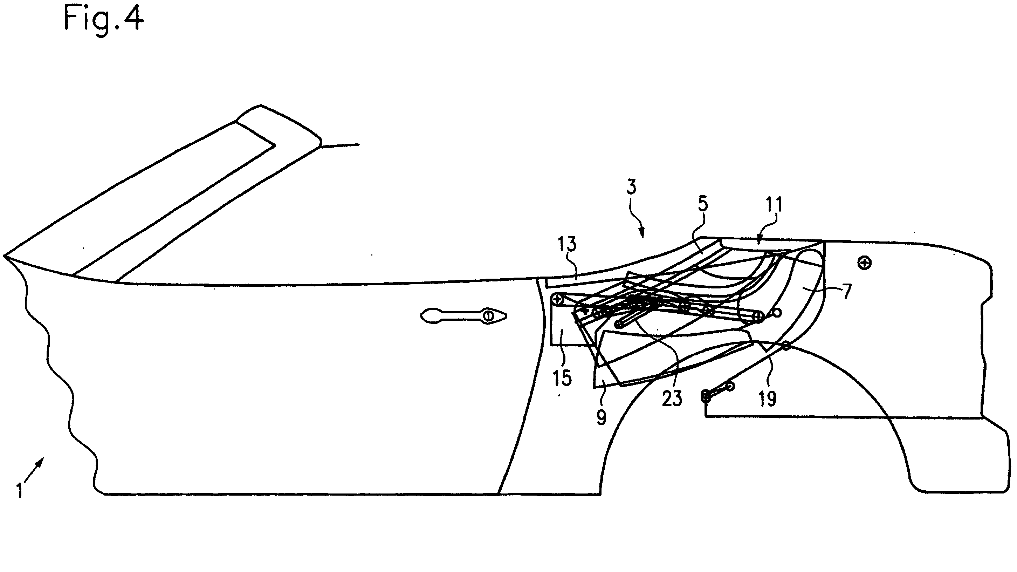

Unter Bezugnahme auf die Figuren 2 bis 4 wird nunmehr das Versenken des Hardtops 3 von seiner geschlossenen Stellung gemäß Fig. 1 in seine eingeschwenkte Stellung gemäß Fig. 4 beschrieben.

In Fig. 2 ist eine deutliche Öffnungsstellung des Cabrioverdecks 3 dargestellt. Zum Einschwenken des Hardtops 3 wird zunächst die Abdeckung 13 nach oben geschwenkt und der Bodenabschnitt 19 um die Achse 20 nach unten geschwenkt. Damit ist der Zugang zum Aufnahmeraum 11 frei, der sich in maximaler Größe befindet.

Wie deutlich aus Fig. 2 ersichtlich, ist der erste Dachabschnitt 5 je Fahrzeuglängsseite über zwei Verbindungsstangen mit dem hinteren Dachabschnitt 7 verbunden, nämlich einer im wesentlichen geraden Verbindungsstange 31 und einer gekrümmten Verbindungsstange 33. Die gerade Verbindungsstange 31 ist oberhalb der gekrümmten Verbindungsstange 33 mit dem hinteren zweiten Dachabschnitt 7 bei 35 gelenkig verbunden. Der Gelenkpunkt 35 befindet sich oberhalb der gekrümmten Verbindungsstange 33. An ihrem anderen Ende ist die gerade Verbindungsstange 31 bei 37 mit dem ersten oberen Dachabschnitt 5 gelenkig verbunden. Der Gelenkpunkt 37 befindet sich vor einem Gelenkpunkt 39, der den vorderen Anlenkpunkt der gekrümmten Verbindungsstange 33 bildet.

Im dargestellten Beispielsfalle gemäß den Figuren 1 bis 4 weist die gekrümmte Verbindungsstange 33 zwei gekrümmte Abschnitte 41 und 43 auf, wobei der Abschnitt 41 ein vorderer Abschnitt ist und der Abschnitt 43 ein hinterer Abschnitt ist. Der hintere Abschnitt 43 ist bei 45 mit dem zweiten hinteren Dachabschnitt 7 gelenkig verbunden. Die gekrümmte Verbindungsstange 33 weist weiterhin einen gelenkigen Verbindungspunkt 47 auf, der eine gelenkige Verbindung der gekrümmten Verbindungsstange 33 mit einer gebogenen Verbindungsstange 49 bildet. Die gebogene Verbindungsstange 49 ist an ihrem unteren Ende gelenkig mit der Lagerplatte 15 verbunden.

Wie aus Fig. 2 weiterhin ersichtlich, weist das erfindungsgemäße versenkbare Hardtop 3 eine Außenabdeckung 51 auf, die im vorderen Bereich des oberen ersten Abschnitts 5 und am hinteren zweiten Dachabschnitt 7 mit den Dachabschnitten 5 bzw. 7 verbunden ist. Im mittleren und hinteren Bereich des oberen ersten Dachabschnitts 5 ist, wie aus Fig. 2 ersichtlich, keine Verbindung zwischen Außenabdeckung 51 und Dachabschnitt 5 vorgesehen.

Wie weiterhin aus Fig. 2 ersichtlich, schwenkt der hintere Abschnitt des oberen ersten Dachabschnitts 5 zunächst nach unten, was mittels der gekrümmten Verbindungsstange 33 erfolgt und schwenkt der obere erste Dachabschnitt 5 im wesentlichen um den Gelenkpunkt 37.

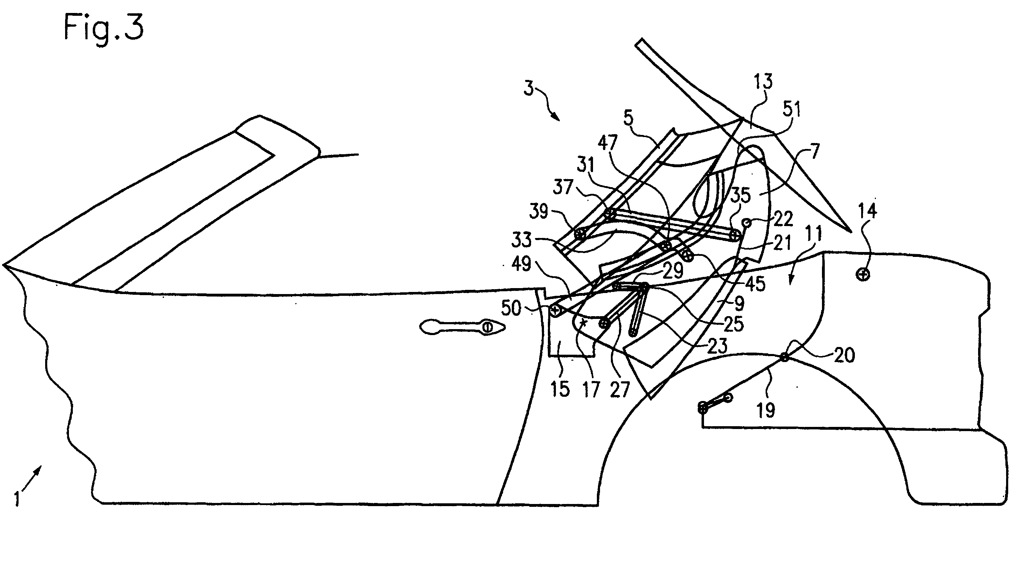

Wie aus Fig. 3 deutlich sichtbar ist, schwenkt die gebogene Verbindungsstange 49 um den Gelenkpunkt 50 an dem Lagerblock bzw. der Lagerplatte 15.

Wie insbesondere aus Fig. 3 klar ersichtlich wird durch den Verbindungsstangenmechanismus der Verbindungsstangen 23, 27 und 29 zwangsgeführt ein Einziehen der Heckscheibe 9 in das Innere des hinteren zweiten Dachabschnitts 7 erzeugt, wodurch eine erhebliche Platzeinsparung beim Zusammenklappen des versenkbaren Hardtops 3 in die in Fig. 4 dargestellte endgültige Versenkposition ermöglicht wird. Wie aus Fig. 4 ersichtlich, befindet sich die Heckscheibe 9 nahezu vollständig innerhalb des hinteren Dachabschnitts 7 und läßt unterhalb einen entsprechenden Platz für weitere Elemente des Kraftfahrzeugs, beispielsweise für den Kraftstofftank, frei. In Fig. 4 ist dann auch die Abdeckung 13 wieder abgesenkt und überdeckt den Aufnahmeraum 11.

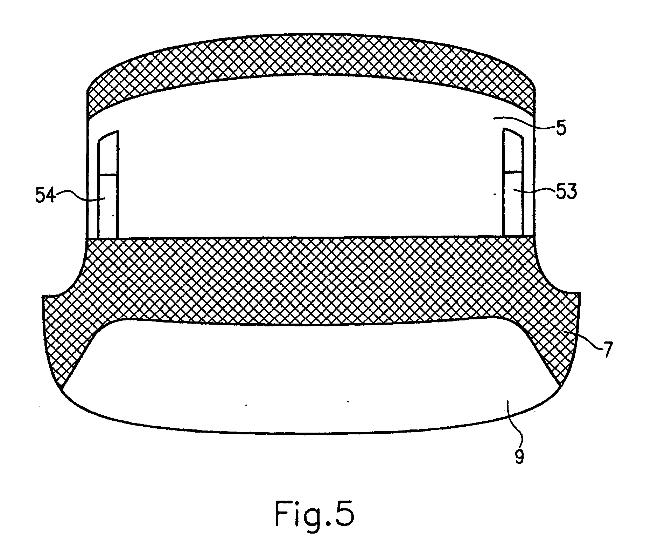

In Fig. 5 ist schematisch eine Ansicht von oben auf den oberen ersten Dachabschnitt 5 und den hinteren zweiten Dachabschnitt 7 dargestellt. Damit entspricht die Ansicht von Fig. 5 einer Ansicht von oben auf das geschlossene Verdeck 3 gemäß Fig. 1, wobei jedoch die Außenabdeckung 51 abgenommen ist. Die Bereiche mit gekreuzter Linierung entsprechen den Verbindungsbereichen der Außenabdeckung 51 mit dem hinteren Dachabschnitt 7 bzw. dem oberen ersten Dachabschnitt 5. Dazwischen (unschraffiert) befindet sich der Bereich, der keine Verbindung mit der Außenabdeckung 51 eingeht.

Weiterhin ist ersichtlich, daß entlang der beiden Längsseiten des oberen ersten Abschnitts 5 Schlitze 53 und 54 ausgebildet sind, durch die sich die geraden Verbindungsstangen 31 und die gekrümmten Verbindungsstangen 33, je eine je Längsseite, erstrecken, wie das leicht bei Ansicht der drei Stellungen gemäß den Figuren 2 bis 4, nachvollzogen werden kann.

Mit der vorliegenden Erfindung wird somit in hervorragender Weise ein versenkbares Hardtop geschaffen, welches äußerst platzsparend in einen Aufnahmeraum eines Kraftfahrzeugs eingeklappt werden kann, wobei durch das Bewegen der Heckscheibe 9 in das Innere des hinteren Abschnitts eine besonders platzsparende Ausgestaltung erreicht wird.

Die vorliegende Erfindung ist nicht auf das dargestellte Ausführungsbeispiel beschränkt. Beispielsweise kann der obere Dachabschnitt aus mehr als nur einem Teil ausgebildet sein, beispielsweise für viersitzige Cabriolets, und kann das mehrteilige Hardtop ebenfalls entsprechend vorteilhaft platzsparend versenkt werden.

## Patentansprüche

1. Versenkbares Hardtop (3) für Kraftfahrzeuge (1)
mit einem ersten, oberen, im wesentlichen starren Dachabschnitt (5), der einen im wesentlichen horizontalen oberen Dachbereich des Fahrzeugs bildet,
mit einem zweiten, im wesentlichen starren hinteren Dachabschnitt (7), der mit dem ersten Dachabschnitt (5) über ein erstes Gestänge (31, 33) und mit dem Fahrzeug gelenkig verbunden ist und einen im wesentlichen vertikal bzw. schräg verlaufenden hinteren Dachbereich bildet,
**dadurch gekennzeichnet,**
**daß** beide Dachabschnitte (5, 7) gleichzeitig und in dieselbe Drehrichtung verschwenkbar angeordnet sind,
**daß** der erste Dachabschnitt (5) während der Schwenkbewegung des zweiten Dachabschnitts (7) in eine Versenkposition im Fahrzeug sich in diesen hineinbewegt, und
**daß** eine starre Heckscheibe (9) schwenkbar an dem zweiten Dachabschnitt (7) angeordnet und mit diesem gemeinsam bewegbar ist, wobei sie beim Verschwenken des zweiten Dachabschnitts (7) in die Versenkposition in das Innere des zweiten Dachabschnitts (7) verschwenkt wird.

2. Versenkbares Hardtop nach Anspruch 1, **dadurch gekennzeichnet, daß** die Heckscheibe (9) in ihrem unteren Bereich im Bereich der Fahrzeuglängsseiten mit je einer Verbindungsstange (23) verbunden ist, wobei jede der beiden Verbindungsstangen (23) in einem Gelenkpunkt (25) mit zwei Verbindungsstangen (27, 29) gelenkig verbunden ist, von denen eine mit dem Fahrzeug (1) und die andere mit dem zweiten Dachabschnitt (7) verbunden ist.

3. Versenkbares Hardtop nach Anspruch 1 oder 2, **dadurch gekennzeichnet, daß** das Verbindungsgestänge von dem ersten und zweiten Dachabschnitt (5, 7) je Fahrzeuglängsseite eine im wesentlichen gerade Verbindungsstange (31) und eine gekrümmte oder geknickte Verbindungsstange (33) aufweist, wobei alle Verbindungsstangen gelenkig angeordnet sind.

4. Versenkbares Hardtop nach Anspruch 3, **dadurch gekennzeichnet, daß** die gerade Verbindungsstange (31) einen Gelenkpunkt (35) mit dem hinteren Dachabschnitt (7) aufweist, der oberhalb eines Gelenkpunkts (45) der gekrümmten Verbindungsstange (43) mit dem hinteren Dachabschnitt (7) liegt.

5. Versenkbares Hardtop nach Anspruch 3 oder 4, **dadurch gekennzeichnet, daß** die geraden Verbindungsstangen (31) einen gelenkigen Verbindungspunkt (37) mit dem oberen ersten Dachabschnitt (5) aufweisen, der vor einem gelenkigen Verbindungspunkt (39) der gekrümmten Verbindungsstangen (33) mit dem oberen Dachabschnitt (5) liegt.

6. Versenkbares Hardtop nach einem der Ansprüche 3 bis 5, **dadurch gekennzeichnet, daß** die gekrümmten Verbindungsstangen (33) gelenkig mit einer gebogenen Verbindungsstange (49) verbunden sind, die ihrerseits gelenkig mit dem Kraftfahrzeug (1) verbunden ist.

7. Versenkbares Hardtop nach einem der Ansprüche 1 bis 6, **dadurch gekennzeichnet, daß** der erste Dachabschnitt (5) in jedem seiner Fahrzeuglängsseitenbereiche einen Schlitz (53, 54) aufweist, durch die sich die geraden und gekrümmten oder geknickten Verbindungsstangen (31, 33) beim Verschwenken des ersten oberen Dachabschnitts (5) bewegen.

8. Versenkbares Hardtop nach einem der Ansprüche 1 bis 7, **dadurch gekennzeichnet, daß** es eine flexible Außenabdeckung (51) aufweist, die mit dem ersten Dachabschnitt (5) in dessen vorderen Bereich und mit dem zweiten Dachabschnitt (7) verbunden ist.

9. Kraftfahrzeug (1), insbesondere Cabriolet mit einem Aufnahmeraum (11) für eine Dachabdeckung, **dadurch gekennzeichnet, daß** die Dachabdeckung ein versenkbares Hardtop nach wenigstens einem der Ansprüche 1 bis 8 aufweist.

10. Kraftfahrzeug nach Anspruch 9, **dadurch gekennzeichnet, daß** der Hardtopaufnahmeraum (11) einen Bodenabschnitt (19) aufweist, der um eine zur Fahrzeuglängsrichtung im wesentlichen quer verlaufende Schwenkachse (20) schwenkbeweglich angeordnet ist.

## Claims

1. Retractable hard top (3) for a motor vehicle (1) comprising
a first substantially rigid upper roof section (5), which forms an essentially horizontal upper roof portion of the motor vehicle,
a second substantially rigid rear roof section (7) which is pivotally connected to the first roof section (5) via a first rod assembly (31, 33) and is pivotally connected to the motor vehicle as well, and which forms a substantially vertical or, respectively, obliquely extending rear roof portion,
**characterised in**
**that** both roof sections (5, 7) are arranged to be swivelled simultaneously in the same direction of rotation,
**that** the first roof section (5) moves into the interior of the second roof section (7) while the second roof section is swivelled into a retracted position in the motor vehicle, and
**that** a rigid rear window (9) is pivotally arranged at and commonly movable with the second roof section (7), wherein the rear window (9) is pivoted into the interior of the second roof section (7) when the second roof section (7) is swivelled into the retracted position in the motor vehicle.

2. Retractable hard top according to claim 1, **characterised in that** the rear window (9) at its lower portion is, in the area of the longitudinal side of the motor vehicle, connected to one connection rod (23) each, wherein each of the two connection rods (23) at a hinge point (25) is pivotally connected to two connection rods (27, 29), one of which being connected to the motor vehicle (1) and the other one of which being connected to the second roof section (7).

3. Retractable hard top according to claim 1 or 2, **characterised in that** the connection rod assembly of the first and the second roof section (5, 7) comprises for each longitudinal side of the motor vehicle a substantially straight connection rod (31) and a curved or bent connection rod (33), wherein all connection rods are arranged pivotally.

4. Retractable hard top according to claim 3, **characterised in that** the straight connection rod (31) is pivotally connected to the rear roof section (7) at a hinge point (35) which is located above a hinge point (45) where the curved connection rod (43) is pivotally connected to the rear roof section (7).

5. Retractable hard top according to claim 3 or 4, **characterised in that** the straight connection rods (31) are pivotally connected to the first upper roof section (5) at a hinge point (37) which is arranged in front of another hinge point (39) where the curved connection rods (33) are pivotally connected to the upper roof section (5).

6. Retractable hard top according to one of claims 3 to 5, **characterised in that** the curved connection rods (33) are pivotally connected to a bent connection rod (49) which in turn is pivotally connected to the motor vehicle (1).

7. Retractable hard top according to one of claims 1 to 6, **characterised in that** the first roof section (5) comprises a slot (53, 54) in each of its longitudinal sides of the motor vehicle, wherein the straight and the curved or bent connection rods (31, 33) move through the slots when the first upper roof section (5) is pivoted.

8. Retractable hard top according to one of claims 1 to 7, **characterised in that** the hard top comprises a flexible outer cover (51) which is connected to the front portion of the first roof section (5) and to the second roof section (7).

9. Motor vehicle (1), in particular a convertible, comprising a storage compartment (11) for a roof cover, **characterised in that** the roof cover comprises a retractable hard top according to at least one of claims 1 to 8.

10. Motor vehicle according to claim 9, **characterised in that** the storage compartment (11) comprises a bottom section (19) which is arranged pivotally movable around a pivot axis (20) extending substantially transversely with respect to the longitudinal direction of the motor vehicle.

## Revendications

1. Hardtop escamotable (3) pour véhicules à moteur (1), comportant une première section de pavillon (5) supérieure, essentiellement rigide, qui constitue une zone de pavillon supérieure sensiblement horizontale, du véhicule,
une seconde section de pavillon (7) arrière, essentiellement rigide, qui est reliée à la première section de pavillon (5) par l'intermédiaire d'une première tringlerie (31, 33) et de manière articulée avec le véhicule et constitue une zone de pavillon arrière s'étendant de manière sensiblement verticale ou oblique,
**caractérisé**
**en ce que** les deux sections de pavillon (5, 7) sont montées escamotables simultanément et dans le même sens de rotation,
**en ce que** la première section de pavillon (5) pendant le mouvement d'escamotage de la seconde section de pavillon (7) se déplace dans une position d'escamotage dans le véhicule, dans celui-ci et
**en ce qu'**une lunette arrière rigide (9) est montée escamotable sur la seconde section de pavillon (7) et est mobile ensemble avec celle-ci, ladite lunette, lors de l'escamotage de la seconde section de pavillon (7) dans la position d'escamotage, étant escamotée à l'intérieur de la seconde section de pavillon (7).

2. Hardtop escamotable selon la revendication 1, **caractérisé en ce que** la lunette arrière (9) est reliée, dans sa zone inférieure dans la zone des côtés longitudinaux dû véhicule, à respectivement une tige de liaison (23), chacune des deux tiges de liaison (23) étant reliée de manière articulée en un point d'articulation (25) avec deux tiges de liaison (27, 29), dont l'une est reliée au véhicule (1) et l'autre à la seconde section de pavillon (7).

3. Hardtop escamotable selon la revendication 1 ou 2, **caractérisé en ce que** la tringlerie de liaison de la première et seconde section de pavillon (5, 7) comporte, par côté longitudinal de véhicule, une tige (31) sensiblement droite et une tige (33) courbée ou coudée, les tiges de liaison étant toutes montées de manière articulée.

4. Hardtop escamotable selon la revendication 3, **caractérisé en ce que** la tige de liaison droite (31) comporte un point d'articulation (35) avec la section de pavillon arrière (7), qui est situé au-dessus d'un point d'articulation (45) de la tige de liaison courbée (43) à la section de pavillon arrière (7).

5. Hardtop escamotable selon la revendication 3 ou 4, **caractérisé en ce que** les tiges de liaison droites (31) comportent un point de liaison articulé (37) à la première section de pavillon supérieure (5), qui est situé en amont d'un point de liaison articulé (39) des tiges de liaison courbées (33) avec la section de pavillon supérieure (5).

6. Hardtop escamotable selon l'une des revendications 3 à 5, **caractérisé en ce que** les tiges de liaison courbées (33) sont reliées de manière articulée avec une tige de liaison cintrée (49) qui est pour sa part reliée de manière articulée avec le véhicule (1).

7. Hardtop escamotable selon l'une des revendications 1 à 6, **caractérisé en ce que** la première section de pavillon (5) présente dans chacune de ses zones des côtés longitudinaux une fente (53, 54), par laquelle les tiges de liaison droites et courbées ou coudées (31, 33) se déplacent lors de l'escamotage de la première section de pavillon supérieure (5).

8. Hardtop escamotable selon l'une des revendications 1 à 7, **caractérisé en ce qu'**il comporte un couvercle extérieur flexible (51), qui est relié avec la première section de pavillon (5) dans la zone antérieure de celle-ci et avec la seconde section de pavillon (7).

9. Véhicule (1), en particulier cabriolet comportant un logement (11) pour un toit, **caractérisé en ce que** le toit comporte un hardtop selon au moins l'une des revendications 1 à 8.

10. Véhicule selon la revendication 9, **caractérisé en ce que** le logement de hardtop (11) comporte une section formant fond (19), qui est montée pivotante suivant un axe de pivotement (20) s'étendant sensiblement transversalement par rapport à la direction longitudinale du véhicule.
